# EUROPÄISCHE PATENTSCHRIFT

(11) **EP 0 763 954 B1**
(45) Veröffentlichungstag und Bekanntmachung des Hinweises auf die Patenterteilung: **04.06.2003**
(21) Anmeldenummer: 96114172.8
(22) Anmeldetag: 04.09.1996
(51) Int. Cl.: H04Q 3/545

(54) **Verfahren zur Auswertung von leistungsmerkmalbezogenen Nachrichten in einer programmgesteuerten Kommunikationseinrichtung**
Method for the interpretation of feature performance related messages in a program controlled communication system
Procédé pour l'interprétation de messages relatifs à des caractéristiques de performance dans un système de communication contrôlé par programme

(30) Priorität: 15.09.1995 DE 19534317
(43) Veröffentlichungstag der Anmeldung: 19.03.1997
(73) Patentinhaber: SIEMENS AKTIENGESELLSCHAFT, 80333 München (DE)
(72) Erfinder: Tanger, Erwin, Dipl.-Ing., 33129 Delbrück (DE); Steinbach, Holger, Dipl.-Ing., 33106 Paderborn (DE); Ahrens, Wilfried, Dipl.Inf., 33102 Paderborn (DE)

(56) Entgegenhaltungen:
- EP-A- 0 576 864
- WO-A-94/29993
- DE-A- 4 420 886
- US-A- 5 448 631
- PROCEEDINGS INTERNATIONAL SWITCHING SYMPOSIUM - PAPER P.B12, Bd. 2, 23. - 28.April 1995, BERLIN (DE), Seiten 137-141, XP000495641 N. FRITSCHE: "Basic Call Processing Architecture for Flexible Control of Supplementary Services"
- IEEE COMMUNICATIONS MAGAZINE, Bd. 31, Nr. 8, August 1993, NEW YORK (US), Seiten 32-37, XP000393760 Y. WAKAHARA ET AL: "A Method for Detecting Service Interactions"
- IEEE COMMUNICATIONS MAGAZINE, Bd. 31, Nr. 8, August 1993, NEW YORK (US), Seiten 24-31, XP000393759 E. KUISCH ET AL: "A Practical Approach to Service Interactions"

## Beschreibung

Programmgesteuerte Kommunikationseinrichtungen, insbesondere Vermittlungseinrichtungen, dienen der Vermittlung von Kommunikationsendgeräten innerhalb eines Kommunikationsnetzes. Jede Verbindung zwischen Kommunikationsendgeräten kann über bestimmte Leistungsmerkmale verfügen. Diese Leistungsmerkmale betreffen sowohl den Aufbau einer Kommunikationsverbindung, z.B. ein den vermittlungstechnischen Zustand der Kommunikationseinrichtung verändernder Verbindungswunsch, als auch Leistungsmerkmale, die bestimmte Zusatzfunktionen für eine bestehende Verbindung konfigurieren. Solche Merkmale sind z.B. das Anzeigen des rufenden Kommunikationsendgerätes, das Anklopfen oder die Gesprächsweiterleitung.

Die Kommunikationseinrichtung ist üblicherweise programmgesteuert und weist zumindest eine Vermittlungseinheit und eine Peripheriesteuerung mit zugehörigen Peripheriebaugruppen auf, wobei sowohl die Vermittlungseinheit als auch die Peripheriesteuerung jeweils Steuereinheiten und Speicher umfassen. Zwischen der Vermittlungseinheit und der Peripheriesteuerung sowie weiteren Einheiten bestehen Verbindungen, über die auch die Signalisierung von Leistungsmerkmalen durchgeführt wird.

Diese Signalisierung wird innerhalb von leistungsmerkmalbezogenen Nachrichten realisiert. Solche leistungsmerkmalbezogenen Nachrichten treffen sowohl von den Kommunikationsendgeräten als auch aus dem Kommunikationsnetz bei der Peripheriesteuerung ein und werden der Vermittlungseinheit übertragen. In der Vermittlungseinheit müssen die leistungsmerkmalbezogenen Nachrichten ausgewertet werden, um diese Signalisierung weiterleiten zu können oder die geforderten Leistungsmerkmalsteuerungen umzusetzen.

Bei der Umsetzung der Leistungsmerkmalsteuerung muß der vermittlungstechnische Zustand der Kommunikationseinrichtung (d.h. welche Verbindungen bestehen und welche vermittlungstechnischen Ressourcen sind zu ihrer Realisierung eingesetzt), in dem sie sich gerade befindet, beachtet werden. Dies führt u.a. dazu, daß bestimmte Leistungsmerkmalsteuerungselemente nur in bestimmten leistungsmerkmalbezogenen Nachrichten übertragen werden können. Zusätzlich ist zu beachten, daß die Vermittlungseinheit abhängig vom aktuellen vermittlungstechnischen Zustand auf ein und dasselbe Leistungsmerkmalsteuerungselement unterschiedliche Verarbeitungsvorgänge auslösen muß. Um diese zustandsändernde vermittlungstechnische Leistungsmerkmalsteuerung umzusetzen, werden bestimmte Leistungsmerkmalsteuerungselemente nur in vordefinierten leistungsmerkmalbezogenen Nachrichten übertragen. Jede leistungsmerkmalbezogene Nachricht wird in Abhängigkeit vom vermittlungstechnischen Zustand der Vermittlungseinheit nach einem fest vorgegebenen Algorithmus auf das Vorliegen von Informationen, d.h. Leistungsmerkmalsteuerungselementen, untersucht.

Aus der Patentschrift EP 0 576 864 A2 ist ein Anrufverarbeitungssystem bekannt, das Leistungsmerkmalen eine Priorität zuordnet und beim Vorliegen mehrerer auszuführender Leistungsmerkmaländerungen die Abarbeitung entsprechend der Priorität vornimmt. Dabei bleibt jedoch unbeachtet, in welchem vermittelungstechnischen Zustand sich das System momentan befindet und ob das entsprechende Leistungsmerkmal den vermittlungstechnischen Zustand verändert oder nicht, wobei der vermittlungstechnische Zustand einer programmgesteuerten Kommunikationseinrichtung in Bezug auf eine Verbindung den Fortschritt des Auf- oder Abbaus der Verbindung (basic call) bezeichnet.

Der Erfindung liegt die Aufgabe zugrunde, ein Auswertungsverfahren für leistungsmerkmalbezogene Nachrichten anzugeben, das unabhängig von der Position, Anzahl und Reihenfolge von Leistungsmerkmalsteuerungselementen und der sie umfassenden leistungsmerkmalbezogenen Nachricht ist. Diese Aufgabe wird durch das Verfahren nach den Merkmalen des Patentanspruchs 1 und die Programmstruktur nach Patentanspruch 10 gelöst.

Durch die Einbettung von Leistungsmerkmalsteuerungselementen in Leistungsmerkmalsteuerungssequenzen kann eine flexbile Verarbeitung vorbereitet werden. Die Anzahl von Leistungsmerkmalsteuerungselementen, die in einer leistungsmerkmalbezogenen Nachricht übertragen werden, ist damit frei auswählbar. Die leistungsmerkmalbezogenen Nachrichten können neben den Leistungsmerkmalsteuerungssequenzen auch weitere Informationen umfassen, d.h. sie bilden lediglich eine Gruppe von Nachrichten, über die Leistungsmerkmalsteuerungssequenzen übertragen werden können. Diese leistungsmerkmalbezogenen Nachrichten werden nach Leistungsmerkmalsteuerungssequenzen untersucht und bei deren Auffinden die Reihenfolge der Auswertung der eingebetteten Leistungsmerkmalsteuerungselemente bestimmt. Problemen mit der Berücksichtigung des vermittlungstechnischen Zustands der Kommunikationseinrichtung geht man dadurch aus dem Weg, daß die Leistungsmerkmalsteuerungselemente kategorisiert und gruppenweise weiterbehandelt werden.

Durch diese Bestimmung der Reihenfolge wird die Unabhängigkeit des Auswertungsverfahrens von der Position, Anzahl und Reihenfolge der Leistungsmerkmalsteuerungselemente innerhalb der Leistungsmerkmalsteuerungssequenz erreicht. Entsprechend der bestimmten Reihenfolge wird jeweils eine dem Leistungsmerkmalsteuerungselement zugeordnete Verarbeitungsroutine ermittelt und zur Steuerung von Leistungsmerkmalen ausgeführt.

Nach einer vorteilhaften Weiterbildung des erfindungsgemäßen Verfahrens erfolgt die Zuordnung der Verarbeitungsroutinen zu den entsprechenden Leistungsmerkmalsteuerungselementen über eine Zuordnungstabelle - Anspruch 2. Durch diese Zuordnungstabelle wird eine Neuordnung der Leistungsmerkmalsteuerung oder eine Erweiterung wesentlich vereinfacht. Völlig unabhängig von den Leistungsmerkmalsteuerungselementen können die zugeordneten Verarbeitungsroutinen neu gestaltet werden. Eine neue oder erweiterte Zuordnung von Verarbeitungsroutinen zu Leistungsmerkmalsteuerungselementen kann durch einfachen Austausch der Zuordnungstabelle auch während des Betriebes erfolgen.

Berücksichtigt man pro leistungsmerkmalbezogener Nachricht nur ein den vermittlungstechnischen Zustand änderndes Leistungsmerkmalsteuerungselement - Anspruch 3 - und ignoriert die übrigen, haben mehrere Leistungsmerkmalsteuerungselemente, die den Zustand ändern und sich eventuell widersprechen, keinen negativen Einfluß auf die Betriebssicherheit der Kommunikationseinrichtung.

Entsprechend einer weiteren vorteilhaften Ausgestaltung des erfindungsgemäßen Verfahrens wird das eine, den vermittlungstechnischen Zustand ändernde Leistungsmerkmalsteuerungselement als letztes der Leistungsmerkmalsteuerungselemente einer leistungsmerkmalbezogenen Nachricht verarbeitet - Anspruch 4. Dies bedeutet, daß die eventuell vorhandenen, den vermittlungstechnischen Zustand der Kommunikationseinrichtung nicht ändernden Leistungsmerkmalsteuerungselemente zuerst verarbeitet werden und sich auf den definierten, beim Empfang der leistungsmerkmalbezogenen Nachricht bestehenden vermittlungstechnischen Zustand beziehen.

Es erweist sich weiterhin als vorteilhaft, die Leistungsmerkmalsteuerungselemente anhand ihres Operationscodes zu unterscheiden und die Bestimmung der Reihenfolge der Auswertung der Leistungsmerkmalsteuerungselemente mit Hilfe von Zeigern vorzunehmen - Anspruch 5. Der Operationscode ist ein Datum, das einen bestimmten Auszuführenden Befehl oder eine Befehlssequenz bezeichnet.

Die Auswertung der leistungsmerkmalbezogenen Nachrichten kann beim Empfang der Nachrichten in einer Vermittlungseinheit eingeleitet werden; ergänzend kann das Auswertungsverfahren nach dem Empfang der Nachrichten durch eine Peripheriesteuerung ausgelöst werden. Die ausgeführten Verarbeitungsroutinen zur Steuerung der Leistungsmerkmale werden sich dabei jedoch unterscheiden.

Es ist weiterhin eine erfindungsgemäße Programmstruktur zur Auswertung der leistungsmerkmalbezogenen Nachrichten innerhalb einer programmgesteuerten Kommunikationseinrichtung angegeben.

Anhand von bildlichen Darstellungen soll das erfindungsgemäße Verfahren und die erfindungsgemäße Programmstruktur näher erläutert werden.

Dabei zeigen
- FIG 1: ein Blockschaltbild des schaltungstechnischen Aufbaus einer programmgesteuerten Kommunikationseinrichtung,
- FIG 2: ein Blockschaltbild einer Programmstruktur der wesentlichen Einheiten innerhalb einer programmgesteuerten Kommunikationseinrichtung,
- FIG 3: eine leistungsmerkmalbezogene Nachricht mit den in einer Leistungsmerkmalsteuerungssequenz eingebetteten Leistungsmerkmalsteuerungselementen,
- FIG 4: eine schematische Darstellung der Unterprogrammstrukturen einer erfindungsgemäßen Programmstruktur zur Auswertung von leistungsmerkmalbezogenen Nachrichten, und
- FIG 5: die Wirkungsweise von Zeigern zur Bestimmung der Reihenfolge der Auswertung von Leistungsmerkmalsteuerungselementen.

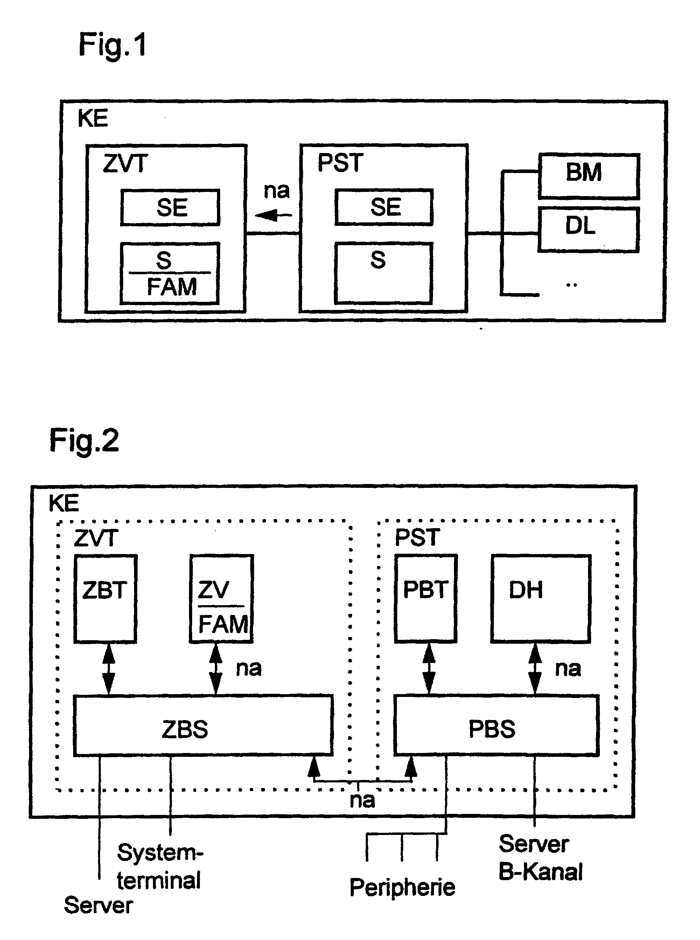

In FIG 1 ist eine programmgesteuerte Kommunikationseinrichtung KE dargestellt, anhand derer das erfindungsgemäße Verfahren zur Auswertung von in einer Vermittlungseinheit ZVT empfangenen, leistungsmerkmalbezogenen Nachrichten na verdeutlicht wird. Die wesentlichen Elemente der Schaltungstechnik der Kommunikationseinrichtung KE sind die Vermittlungseinheit ZVT, die mit einer Peripheriesteuerung PST verbunden ist. Die Peripheriesteuerung PST repräsentiert dabei das Verbindungsglied zu Betriebssteuermitteln BM und Anschlußeinheiten DL.

Sowohl die Vermittlungseinheit ZVT, als auch die Peripheriesteuerung PST enthalten eine Steuereinrichtung SE und zumindest einen Speicher S. Die leistungsmerkmalbezogenen Nachrichten na werden von der Peripheriesteuerung PST an die Vermittlungseinheit ZVT übermittelt und durch letztere ausgewertet. Zur Auswertung dieser leistungsmerkmalbezogenen Nachrichten na ist im Speicher S der Vermittlungseinheit ZVT eine Programmstruktur FAM gespeichert.

Die programmgesteuerte Kommunikationseinrichtung KE wird losgelöst vom Kommunikationsnetz und von den Anschlußleitungen zu den Kommunikationsendgeräten betrachtet. Es sei im weiteren angenommen, daß die zur Leistungsmerkmalsteuerung vorgesehenen Leistungsmerkmalsteuerungselementen fac-ie in eine Leistungsmerkmalsteuerungssequenz fac eingebettet und Teil der leistungsmerkmalbezogenen Nachricht na sind. Diese leistungsmerkmalbezogene Nachricht na kann alternativ in der Peripheriesteuerung PST gebildet oder von dieser empfangen und verändert weitergeleitet werden.

Die in FIG 2 dargestellte globale Programmstruktur der programmgesteuerten Kommunikationseinrichtung KE soll anhand von Blockschaltbildern lediglich für die Vermittlungseinheit ZVT und die Peripheriesteuerung PST näher erläutert werden.

Die Programmstruktur der Vermittlungseinheit ZVT umfaßt dabei Programme zur zentralen Betriebs- und Sicherheitstechnik ZBT, zur zentralen Vermittlungstechnik ZV und für ein zentrales Betriebssystem ZBS. Die zentrale Betriebs- und Sicherheitstechnik ZBT stellt allgemeine Systemfunktionen zur Verfügung. Sie übernimmt u.a. Systemfunktionen, wie Datensicherung, Konfiguration, Systemhochlauf, Ladetechnik, Taktsynchronisation und Ausfallüberwachung.

Die zentrale Vermittlungstechnik ZV steuert den Verbindungsauf- und -abbau sowie die Behandlung von Leistungsmerkmalen, letzteres unter Mitwirkung der Programmstruktur FAM zur Verarbeitung von leistungsmerkmalbezogenen Nachrichten na. Es werden durch die zentrale Vermittlungstechnik ZV z.B. folgende Aufgaben durchgeführt: Plausibilitätsprüfungen der Peripheriemeldungen, Überwachung des logischen Zustandes von Verbindungen, Verwaltung und Zuteilung von Betriebsmitteln, Bewertung von gewählten Ziffern, Erfassung von Gesprächsdaten, Kommunikation mit externen Rechnern.

Das zentrale Betriebssystem ZBS bildet die Schnittstelle zwischen den schaltungstechnischen Komponenten der programmgesteuerten Kommunikationseinrichtung KE und den Systemprogrammen. Es übernimmt die Speicherverwaltung, die Prozeßverwaltung und die Ansteuerung externer Schnittstellen zum Anschluß von Peripheriegeräten, wie z.B. einem Systemterminal und einem Server, und ermöglicht ferner den Informationstransfer von und zur Peripheriesteuerung PST.

Auf Seiten der Peripheriesteuerung PST, die Programme zur Betriebs- und Sicherheitstechnik PBT der Peripheriesteuerung PST, zur Steuerung der Peripheriebaugruppen (Device Handler) DH und zum Betriebssystem PBS der Peripheriesteuerung PST umfaßt, übernimmt das Betriebssystem PBS der Peripheriesteuerung PST den Empfang und das Senden von Informationen von und zur Vermittlungseinheit ZVT. Diese Informationen umfassen z.B. die leistungsmerkmalbezogenen Nachrichten na.

Die Betriebs- und Sicherheitstechnik PBT der Peripheriesteuerung PST stellt allgemeine Systemfunktionen zur Verfügung und übernimmt das Laden der Peripheriebaugruppen, die Gerätedatenbereitstellung und -sicherung, die Teilnehmerverwaltung, die Fehlerbehandlung und weitere Funktionen im Zusammenhang mit den angeschlossenen Peripheriebaugruppen.

Ein Device Handler DH ist das Bindeglied zwischen der Vermittlungstechnik und der Schnittstelle zu den Peripheriebaugruppen. Er kann damit Programme zur Steuerung von analogen Verbindungen, zur Steuerung von ISDN-Schicht-3-Protokollen und/oder anderen Peripheriebaugruppenkomplexen übernehmen.

Das Betriebssystem BPS der Peripheriesteuerung PST bildet die Schnittstelle zwischen der Schaltungstechnik und den Betriebsprogrammen, wie Device Handler DH und Betriebssystem BPS der Peripheriesteuerung PST. Das Betriebssystem BPS übernimmt die Initialisierung der Peripheriesteuerung PST, die Speicherverwaltung, die Bereitstellung von Services, die Bedienung der externen Schnittstellen und weiteres. Es sind Server und B-Kanäle anschließbar.

Nach Empfang einer durch den Device Handler DH der Peripheriesteuerung PST übermittelten leistungsmerkmalbezogenen Nachricht na wird diese durch die Programmstruktur FAM in der Zentralen Vermittlungstechnik ZV ausgewertet. Es ist ebenfalls möglich, eine Programmstruktur FAM zur Auswertung von leistungsmerkmalbezogenen Nachrichten na in einem Device Handler DH anzuordnen und zumindest Teile der Leistungsmerkmalsteuerung dort zu verwirklichen.

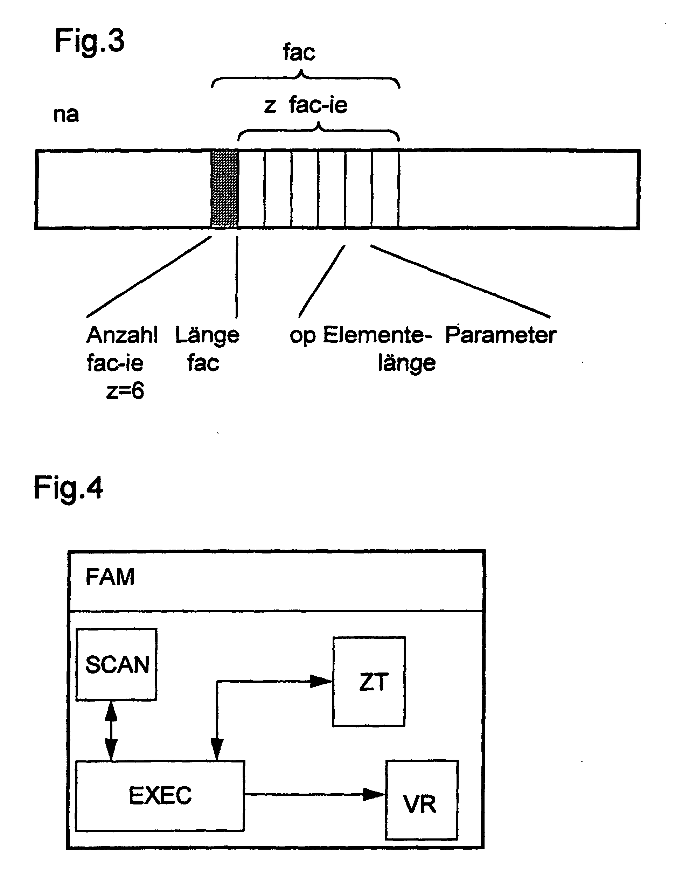

Die Programmstruktur FAM zur Auswertung leistungsmerkmalbezogener Nachrichten na ist in FIG 4 schematisch dargestellt.

Sie umfaßt zumindest eine Bewertungsunterprogrammstruktur SCAN zum Durchsuchen der leistungsmerkmalbezogenen Nachrichten na nach Leistungsmerkmalsteuerungssequenzen fac und zum Bestimmen der Reihenfolge der Weiterbehandlung von aufgefundenen Leistungsmerkmalsteuerungselementen fac-ie und eine Abarbeitungsunterprogrammstruktur EXEC zum Aufrufen der Leistungsmerkmalsteuerungselementen fac-ie zugeordneten Verarbeitungsroutinen VR zur Steuerung von Leistungsmerkmalen. Zur Programmstruktur FAM gehören weiterhin eine Zuordnungstabelle ZT, die die Korrespondenz zwischen Leistungsmerkmalsteuerungselementen fac-ie und Verarbeitungsroutinen VR bewirkt, und Verarbeitungsroutinen VR für Leistungsmerkmalsteuerungselemente fac-ie.

Die Struktur einer beispielhaften auszuwertenden leistungsmerkmalbezogenen Nachricht na ist in FIG 3 dargestellt. Eine Leistungsmerkmalsteuerungssequenz fac umfaßt neben den beispielhaften z, in diesem Fall z gleich sechs Leistungsmerkmalsteuerungselementen fac-ie, einen Kopf, der die Anzahl der Leistungsmerkmalsteuerungselemente fac-ie und die Länge der Sequenz fac angibt. In jedem der Leistungsmerkmalsteuerungselemente fac-ie ist ein Operationscode op, eine Angabe über die Elementelänge und Parameter enthalten. Die bezweckte Steuerung der Leistungsmerkmale und damit die Leistungsmerkmalsteuerungselemente fac-ie werden anhand des Operationscodes op unterschieden.

Anhand des Operationscodes op werden die Leistungsmerkmalsteuerungselemente fac-ie in zwei Kategorien unterteilt, in Elemente x-fac-ie, die den vermittlungstechnischen Zustand der die Leistungsmerkmale steuernden Kommunikationseinrichtung KE ändern, und Elemente n-fac-ie, die den Zustand unverändert lassen.

Die Leistungsmerkmalsteuerungselemente fac-ie werden nicht kategorisch nach ihrer Reihenfolge in der Leistungsmerkmalsteuerungssequenz fac abgearbeitet; entsprechend der Kategorisierung werden sie gruppenweise weiterbehandelt.

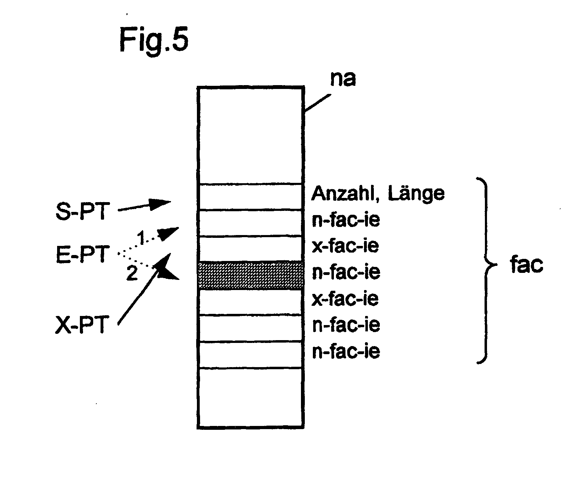

Durch die Darstellung der Zeigerstruktur in FIG 5 wird die Bestimmung der Reihenfolge der Weiterbehandlung der Leistungsmerkmalsteuerungselemente fac-ie deutlicher. Die Struktur der leistungsmerkmalbezogenen Nachricht na wurde aus FIG 3 übernommen, jedoch ist hier nicht der Kopf der Leistungsmerkmalsequenz fac, sondern das gerade zur Weiterbehandlung vorliegende Leistungsmerkmalsteuerungselement hervorgehoben.

Ein Sequenzzeiger S-PT ist auf den Beginn einer Leistungsmerkmalsteuerungssequenz fac, d.h. auf Angaben über die Anzahl der Leistungsmerkmalsteuerungselemente-fac-ie und die Länge der Sequenz fac, eingestellt. Ein Elementezeiger E-PT steht zu Beginn der Auswertung (durch 1 angedeutet) auf dem ersten Leistungsmerkmalsteuerungselement fac-ie, beispielsweise einem Element n-fac-ie, das den vermittlungstechnischen Zustand der Kommunikationseinrichtung KE nicht ändert.

Dieses Element n-fac-ie wird nach seinem Operationscode op ausgewertet und unter Zuhilfenahme der Zuordnungstabelle ZT wird die zugeordnete Verarbeitungsroutine VR bestimmt und von der Bewertungsunterprogrammstruktur SCAN an die Abarbeitungsunterprogrammstruktur EXEC zum Aufrufen der Verarbeitungsroutine VR übergeben. Nach Ausführung der Verarbeitungsroutine VR wird der Elementezeiger E-PT auf das nächste Leistungsmerkmalsteuerungselement fac-ie eingestellt.

Gemäß FIG 5 ist dieses beispielsweise ein den Zustand änderndes Element x-fac-ie, das erst am Ende der Leistungsmerkmalverarbeitungssequenz weiterbehandelt werden soll. Dazu wird ein weiterer Zeiger X-PT auf dieses erste den Zustand ändernde Element x-fac-ie innerhalb der Leistungsmerkmalsteuerungssequenz fac einstellt.

So wird als zweites Leistungsmerkmalsteuerungselement das darauffolgende Element n-fac-ie verarbeitet, auf das der Elementezeiger E-PT in der Position 2 eingestellt ist. Ein weiteres, den Zustand änderndes Element x-fac-ie wird ignoriert. Das zweifache Auftreten eines den Zustand ändernden Leistungsmerkmalsteuerungselements x-fac-ie ist nicht vorgesehen, es deutet also auf einen Fehler hin und wird durch ein Ignorieren des zweiten Elementes x-fac-ie entsprechend behandelt.

In Folge werden alle weiteren, den Zustand nicht ändernde Leistungsmerkmalsteuerungselemente n-fac-ie abgearbeitet, worauf zuletzt das erste durch den gesonderten Zeiger X-PT bezeichnete, den Zustand ändernde Leistungmerkmalsteuerungselement x-fac-ie der Abarbeitungsunterprogrammstruktur EXEC übergeben wird, wobei durch die zugehörige Verarbeitungsroutine VR auch eine Zustandsänderung bezüglich der Vermittlungstechnik bewirkt wird.

Alternativ besteht die Möglichkeit, die Verarbeitungsroutinen VR und die Signalisierung der Leistungsmerkmale so abzustimmen, daß die den Zustand ändernden Leistungsmerkmalsteuerungselemente x-fac-ie vor allen den Zustand nicht ändernden Elementen n-fac-ie abgearbeitet werden.

Nach Weiterbehandlung des letzten Leistungsmerkmalsteuerungselementes fac-ie wird die Programmstruktur FAM zur Verarbeitung von leistungsmerkmalbezogenen Nachrichten na zur Durchsuchung der nächsten leistungsmerkmalbezogenen Nachricht na zurückgesetzt.

## Patentansprüche

1. Verfahren zur Auswertung von innerhalb einer programmgesteuerten Kommunikationseinrichtung (KE) zu verarbeitenden leistungsmerkmalbezogenen Nachrichten (na),
- die eine auswählbare Anzahl in Leistungsmerkmalsteuerungssequenzen (fac) eingebetteter Leistungsmerkmalsteuerungselemente (fac-ie) umfassen können, **dadurch gekennzeichnet**, daβ
- die leistungsmerkmalbezogenen Nachrichten (na) nach Leistungsmerkmalsteuerungssequenzen (fac) durchsucht werden,
- nach dem Auffinden von Leistungsmerkmalsteuerungssequenzen (fac) die Reihenfolge der Auswertung der eingebetteten Leistungsmerkmalsteuerungselementen (fac-ie) derart bestimmt wird, daß in Elemente (x-fac-ie), die den vermittlungstechnischen Zustand der die Leistungsmerkmale steuernden Kommunikationseinrichtung (KE) ändern, und in Elemente (n-fac-ie), die den venriittlungstechni sehen Zustand unverändert lassen, unterschieden wird, und
- entsprechend dieser Unterscheidung jeweils gruppenweise den Leistungsmerkmalsteuerungselementen (fac-ie) zugeordnete Verarbeitungsroutinen (VR) zur Steuerung von Leistungsmerkmalen ausgeführt werden.

2. Verfahren nach Anspruch 1,
**dadurch gekennzeichnet,**
**daß** die Zuordnung der Verarbeitungsroutinen (VR) zu den entsprechenden Leistungsmerkmalsteuerungselementen (fac-ie) über eine Zuordnungstabelle (ZT) erfolgt.

3. Verfahren nach Anspruch 1 oder 2,
**dadurch gekennzeichnet,**
**daß** pro leistungsmerkmalbezogener Nachricht (na) nur ein den vermittlungstechnischen Zustand änderndes Leistungsmerkmalsteuerungselement (x-fac-ie) weiterbehandelt wird.

4. Verfahren nach Anspruch 3,
**dadurch gekennzeichnet,**
**daß** das den vermittlungstechnischen Zustand ändernde Leistungsmerkmalsteuerungselement (x-fac-ie) als letztes Leistungsmerkmalsteuerungselement (fac-ie) einer leistungsmerkmalbezogenen Nachricht (na) verarbeitet wird.

5. Verfahren nach einem der vorhergehenden Ansprüche,
**dadurch gekennzeichnet,**
**daß** die Leistungsmerkmalsteuerungselemente (fac-ie) anhand ihres Operationskodes (op) unterschieden werden und weiterhin Angaben über ihre Elementelänge und die zugehörigen Parameter enthalten.

6. Verfahren nach einem der vorhergehenden Ansprüche,
**dadurch gekennzeichnet,**
**daß** beim Auffinden von Leistungsmerkmalsteuerungssequenzen (fac) in leistungsmerkmalbezogenen Nachrichten (na) ein Sequenzzeiger (S-PT) auf den Beginn der Leistungsmerkmalsteuerungssequenzen (fac) und ein Elementezeiger (E-PT) auf den Beginn des ersten Leistungsmerkmalsteuerungselements (fac-ie) eingestellt wird,
wobei der Elementezeiger (E-PT) während der Weiterbehandlung jeweils auf das nächste zu bearbeitende Leistungsmerkmalsteuerungselement (fac-ie) eingestellt wird.

7. Verfahren nach einem der vorhergehenden Ansprüche,
**dadurch gekennzeichnet,**
**daß** beim Auffinden des ersten den vermittlungstechnischen Zustand ändernden Leistungsmerkmalsteuerungselements (x-fac-ie) ein gesonderter Zeiger (X-PT) auf dessen Adresse eingestellt wird.

8. Verfahren nach einem der vorhergehenden Ansprüche,
das nach Empfang von leistungsmerkmalbezogenen Nachrichten (na) in einer Vermittlungseinheit (ZVT) einer programmgesteuerten Kommunikationseinrichtung (KE) ausgelöst wird.

9. Verfahren nach einem der Ansprüche 1 bis 7,
das nach Empfang von leistungsmerkmalbezogenen Nachrichten (na) in einer Peripheriesteuerung (PST) einer programmgesteuerten Kommunikationseinrichtung (KE) ausgelöst wird.

10. Programmstruktur (FAM) innerhalb einer programmgesteuerten Kommunikationseinrichtung (KE) zur Auswertung von leistungsmerkmalbezogenen Nachrichten (na),
- die eine auswählbare Anzahl in Leistungsmerkmalsteuerungssequenzen (fac) eingebetteter Leistungsmerkmalsteuerungselemente (fac-ie) umfassen können, **dadurch gekennzeichnet, daß**
- eine Bewertungsunterprogrammstruktur (SCAN) zum Durchsuchen der leistungsmerkmalbezogenen Nachrichten (na) nach Leistungsmerkmalsteuerungssequenzen (fac) und zum Bestimmen der Reihenfolge der Weiterbehandlung von aufgefundenen Leistungsmerkmalsteuerungselementen (fac-ie) umfaßt und
- eine Abarbeitungsunterprogrammstruktur (EXEC) zum Aufrufen von den Leistungsmerkmalsteuerungselementen (fac-ie) zugeordnete Verarbeitungsroutinen (VR) zur Steuerung von Leistungsmerkmalen
aufweist.

11. Programmstruktur (FAM) nach Anspruch 10,
mit einer Zuordnungstabelle (ZT) zur Zuordnung der Verarbeitungsroutinen (VR) zu den entsprechenden Leistungsmerkmalsteuerungselementen (fac-ie).

12. Programmstruktur (FAM) nach Anspruch 10 oder 11,
**dadurch gekennzeichnet,**
**daß** die Bewertungsunterprogrammstruktur (SCAN) derart ausgestaltet ist, daß bei der Bestimmung der Reihenfolge der Auswertung die Leistungsmerkmalsteuerungselemente (fac-ie) in Elemente (x-fac-ie), die den vermittlungstechnischen Zustand der die Leistungsmerkmale steuernden Kommunikationseinrichtung (KE) ändern, und in Elemente (n-fac-ie), die den Zustand unverändert lassen, unterschieden und gruppenweise weiterbehandelt werden und pro leistungsmerkmalbezogener Nachricht (na) nur ein den Zustand änderndes Leistungsmerkmalsteuerungselement (x-fac-ie) weiterbehandelt wird.

13. Programmstruktur (FAM) nach Anspruch 10, 11 oder 12,
**dadurch gekennzeichnet,**
**daß** die Bewertungsunterprogrammstruktur (SCAN) derart ausgestaltet ist, die Leistungsmerkmalsteuerungselemente (fac-ie) anhand ihres Operationskodes (op) unterschieden werden und weiterhin Angaben über ihre Elementelänge und die zugehörigen Parameter ausgewertet werden.

14. Programmstruktur (FAM) nach einem der Ansprüche 10 bis 13,
**dadurch gekennzeichnet,**
**daß** die Bewertungsunterprogrammstruktur (SCAN) derart ausgestaltet ist, daß beim Auffinden von Leistungsmerkmalsteuerungssequenzen (fac) in leistungsmerkmalbezogenen Nachrichten (na) ein Sequenzzeiger (S-PT) auf den Beginn der Leistungsmerkmalstruktur (fac) und ein Elementezeiger (E-PT) auf den Beginn des ersten Leistungsmerkmalsteuerungselements (fac-ie) eingestellt wird,
wobei der Elementezeiger (E-PT) während der Weiterbehandlung jeweils auf das nächste zu bearbeitende Leistungsmerkmalsteuerungselement (fac-ie) eingestellt wird.

15. Programmstruktur (FAM) nach Anspruch 14,
**dadurch gekennzeichnet,**
**daß** die Bewertungsunterprogrammstruktur (SCAN) derart ausgestaltet ist, daß beim Auffinden des ersten den Zustand ändernden Leistungsmerkmalsteuerungselements (x-fac-ie) ein gesonderter Zeiger (X-PT) auf dessen Adresse eingestellt wird.

## Claims

1. Method for evaluating service-feature-related messages (na) which need to be processed within a program-controlled communication device (KE) and
- which can comprise a selectable number of service-feature control elements (fac-ie) embedded in service-feature control sequences (fac), **characterized in that**
- the service-feature-related messages (na) are searched for service-feature control sequences (fac),
- discovery of service-feature control sequences (fac) is followed by the order of evaluation of the embedded service-feature control elements (fac-ie) being determined such that a distinction is drawn between elements (x-fac-ie) which change the call-processing state of the communication device (KE) controlling the service features and elements (n-fac-ie) which leave the call-processing state unchanged, and
- in line with this distinction, processing routines (VR) respectively associated with the service-feature control elements (fac-ie) on a group-by-group basis are executed in order to control service features.

2. Method according to Claim 1,
**characterized**
**in that** the processing routines (VR) are associated with the corresponding service-feature control elements (fac-ie) using an association table (ZT).

3. Method according to Claim 1 or 2,
**characterized**
**in that** only one service-feature control element (x-fac-ie) which changes the call-processing state is subjected to further treatment per service-feature-related message (na).

4. Method according to Claim 3,
**characterized**
**in that** the service-feature control element (x-fac-ie) which changes the call-processing state is processed as the last service-feature control element (fac-ie) in a service-feature-related message (na).

5. Method according to one of the preceding claims,
**characterized**
**in that** the service-feature control elements (fac-ie) are distinguished using their operation code (op) and continue to contain details about their element length and the associated parameters.

6. Method according to one of the preceding claims,
**characterized**
**in that** discovery of service-feature control sequences (fac) in service-feature-related messages (na) causes a sequence pointer (S-PT) to be set to the start of the service-feature control sequences (fac) and an element pointer (E-PT) to be set to the start of the first service-feature control element (fac-ie),
with the element pointer (E-PT) respectively being set, during the further treatment, to the next service-feature control element (fac-ie) which is to be handled.

7. Method according to one of the preceding claims,
**characterized**
**in that** discovery of the first service-feature control element (x-fac-ie) which changes the call-processing state causes a separate pointer (X-PT) to be set to the address of said service-feature control element.

8. Method according to one of the preceding claims,
which is initiated following reception of service-feature-related messages (na) in a call-processing unit (ZVT) in a program-controlled communication device (KE).

9. Method according to one of Claims 1 to 7,
which is initiated following reception of service-feature-related messages (na) in a peripheral controller (PST) in a program-controlled communication device (KE).

10. Program structure (FAM) within a program-controlled communication device (KE) for evaluating service-feature-related messages (na),
- which can comprise a selectable number of service-feature control elements (fac-ie) embedded in service-feature control sequences (fac), **characterized in that** it
- comprises an assessment subprogram structure (SCAN) for searching the service-feature-related messages (na) for service-feature control sequences (fac) and for determining the order of further treatment of service-feature control elements (fac-ie) which are discovered, and
- has an execution subprogram structure (EXEC) for calling processing routines (VR), associated with the service-feature control elements (fac-ie), for controlling service features.

11. Program structure (FAM) according to Claim 10,
having an association table (ZT) for associating the processing routines (VR) with the corresponding service-feature control elements (fac-ie).

12. Program structure (FAM) according to Claim 10 or 11,
**characterized**
**in that** the assessment subprogram structure (SCAN) is in a form such that determining the order of evaluation involves the service-feature control elements (fac-ie) being distinguished as elements (x-fac-ie) which change the call-processing state of the communication device (KE) controlling the service features and as elements (n-fac-ie) which leave the state unchanged, and being treated further on a group-by-group basis, and involves only one service-feature control element (x-fac-ie) which changes the state being subjected to further treatment per service-feature-related message (na).

13. Program structure (FAM) according to Claim 10, 11 or 12,
**characterized**
**in that** the assessment subprogram structure (SCAN) is in a form such that the service-feature control elements (fac-ie) are distinguished using their operation code (op), and details about their element length and the associated parameters continue to be evaluated.

14. Program structure (FAM) according to one of Claims 10 to 13, **characterized**
**in that** the assessment subprogram structure (SCAN) is in a form such that discovery of service-feature control sequences (fac) in service-feature-related messages (na) causes a sequence pointer (S-PT) to be set to the start of the service-feature structure (fac) and an element pointer (E-PT) to be set to the start of the first service-feature control element (fac-ie),
with the element pointer (E-PT) respectively being set, during the further treatment, to the next service-feature control element (fac-ie) which is to be handled.

15. Program structure (FAM) according to Claim 14,
**characterized**
**in that** the assessment subprogram structure (SCAN) is in a form such that discovery of the first service-feature control element (x-fac-ie) which changes the state causes a separate pointer (X-PT) to be set to the address of said service-feature control element.

## Revendications

1. Procédé destiné à interpréter, à l'intérieur d'un système de communication (KE), contrôlé par programme, des messages (na) à traiter, relatifs aux services complémentaires,
- qui peuvent comprendre un nombre, qui peut être choisi, d'éléments (fac-ie) de commande des services complémentaires intégrés dans des séquences (fac) de commande de services complémentaires,
**caractérisé par le fait que**
- les messages (na) relatifs aux services complémentaires sont analysés quant à la présence de séquences (fac) de commande de services complémentaires,
- après que des séquences (fac) de commande de services complémentaires ont été détectées, l'ordre de succession de l'interprétation des éléments (fac-ie) de commande des services complémentaires est déterminé de telle sorte qu'il est fait une distinction entre éléments (x-fac-ie), qui modifient l'état de commutation du système de communication (KE) contrôlant les services complémentaires, et éléments (n-fac-ie), qui laissent l'état de commutation inchangé, et
- en fonction de cette distinction, des routines de traitement (VR), destinées à la commande de services complémentaires et affectées aux éléments (fac-ie) de commande des services complémentaires, sont exécutées, dans chaque cas, groupe par groupe.

2. Procédé selon la revendication 1
**caractérisé par le fait**
**que** la correspondance entre les routines de traitement (VR) et les éléments (fac-ie) correspondants de commande des services complémentaires se fait par l'intermédiaire d'un tableau de correspondance (ZT).

3. Procédé selon la revendication 1 ou 2
**caractérisé par le fait**
**que**, pour chaque message (na) relatif aux services complémentaires, seul un élément (x-fac-ie), qui modifie l'état de commutation, est traité.

4. Procédé selon la revendication 3
**caractérisé par le fait**
**que** l'élément (x-fac-ie) de commande des services complémentaires, qui modifie l'état de commutation, est traité comme le demier des éléments (fac-ie) de commande des services complémentaires d'un message (na) relatif aux services complémentaires.

5. Procédé selon l'une des revendications précédentes
**caractérisé par le fait**
**que** les éléments (fac-ie) de commande des services complémentaires sont différenciés à l'aide de leur code opérationnel (op) et qu'en outre, ils renferment des indications relatives à leur longueur et aux paramètres correspondants.

6. Procédé selon l'une des revendications précédentes
**caractérisé par le fait**
**que**, lorsque des séquences (fac) de commande des services complémentaires sont trouvées dans des messages (na) relatifs aux services complémentaires, un pointeur de séquence (S-PT) est réglé sur le début des séquences (fac) de commande des services complémentaires et un pointeur d'élément (E-PT) est réglé sur le début du premier élément (fac-ie) de commande des services complémentaires,
le pointeur d'élément (E-PT) étant réglé, pendant la poursuite du traitement, dans chaque cas, sur l'élément (fac-ie) de commande de services complémentaires qui doit être traité en suivant.

7. Procédé selon l'une des revendications précédentes
**caractérisé par le fait**
**que**, lorsque le premier élément (x-fac-ie) de commande des services complémentaires, qui modifie l'état de commutation, a été trouvé, un pointeur spécial (X-PT) est réglé sur son adresse.

8. Procédé selon l'une des revendications précédentes
qui est déclenché après réception de messages (na), relatifs aux services complémentaires, dans une unité de commutation (ZVT) d'un système de communication (KE) contrôlé par programme.

9. Procédé selon l'une des revendications 1 à 7
qui est déclenché après réception de messages (na), relatifs aux services complémentaires, dans une commande de périphérie (PST) d'un système de communication (KE) contrôlé par programme.

10. Structure de programme (FAM) à l'intérieur d'un système de communication (KE) contrôlé par programme destinée à l'interprétation de messages (na) relatifs aux services complémentaires
- qui peuvent comprendre un nombre, qui peut être choisi, d'éléments (fac-ie) de commande des services complémentaires intégrés dans des séquences (fac) de commande des services complémentaires,
**caractérisé par le fait**
- **qu'**elle comprend une structure de sous-programmes d'interprétation (SCAN), destinée à analyser les messages (na) relatifs aux services complémentaires quant à des séquences (fac) de commande des services complémentaires et à déterminer l'ordre de succession de la poursuite du traitement d'éléments (fac-ie) de commande de services complémentaires, qui ont été trouvés, et
- une structure de sous-programmes de traitement (EXEC), destinée à appeler des routines de traitement (VR) affectées aux éléments (fac-ie) de commande de services complémentaires en vue de contrôler les services complémentaires.

11. Structure de programme (FAM) selon la revendication 10
ayant un tableau de correspondance (ZT) pour la correspondance entre les routines de traitement (VR) et les éléments (fac-ie) correspondants de commande de services complémentaires.

12. Structure de programme (FAM) selon la revendication 10 ou 11
**caractérisée par le fait**
**que** la structure de sous-programmes d'interprétation (SCAN) est conçue de telle sorte que, lors de la détermination de l'ordre de succession de l'interprétation, les éléments (fac-ie) de commande des services complémentaires sont classés en éléments (x-fac-ie), qui modifient l'état de commutation du système de communication (KE) qui contrôle les services complémentaires, et en éléments (n-fac-ie), qui laissent l'état inchangé, et leur traitement est poursuivi groupe par groupe et, pour chaque message (na) relatif aux services complémentaires, un seul élément (x-fac-ie), qui modifie l'état, continue est traité.

13. Structure de programme (FAM) selon la revendication 10, 11 ou 12
**caractérisée par le fait**
**que** la structure de sous-programmes d'interprétation (SCAN) est conçue de telle sorte que les éléments (fac-ie) de commande des services complémentaires sont différenciés par leur code opérationnel (op) et qu'en outre, des indications concernant leur longueur et les paramètres correspondants sont interprétées.

14. Structure de programme (FAM) selon l'une des revendications 10 à 13
**caractérisée par le fait**
**que** la structure de sous-programmes d'interprétation (SCAN) est conçue de telle sorte que, lorsque des séquences (fac) de commande des services complémentaires sont trouvées dans des messages (na) relatifs aux services complémentaires, un indicateur de séquence (S-PT) est réglé sur le début de la structure (fac) de services complémentaires et un indicateur d'élément (E-PT) est réglé sur le début du premier élément (fac-ie) de commande des services complémentaires,
l'indicateur d'élément (E-PT) étant réglé, pendant la poursuite du traitement, dans chaque cas, sur l'élément (fac-ie) de commande de services complémentaires qui est le suivant à être traité.

15. Structure de programme (FAM) selon la revendication 14
**caractérisée par le fait**
**que** la structure de sous-programmes d'interprétation (SCAN) est conçue de telle sorte que, lorsque le premier élément (x-fac-ie) de commande des services complémentaires, qui modifie l'état, a été trouvé un pointeur spécial (X-PT) est réglé sur son adresse.
